# EUROPÄISCHE PATENTSCHRIFT

(11) **EP 2 639 093 B1**
(45) Veröffentlichungstag und Bekanntmachung des Hinweises auf die Patenterteilung: **13.07.2016**
(21) Anmeldenummer: 13158773.5
(22) Anmeldetag: 12.03.2013
(51) Int. Cl.: B60K 13/04, F01N 13/18, F16F 15/08, F16F 1/387

(54) **Schwingungslager für eine Abgasanlage in einem Kraftfahrzeug**
Vibration mount for an exhaust system in a motor vehicle
Palier d'oscillation pour une installation de gaz d'échappement dans un véhicule

(30) Priorität: 13.03.2012 DE 102012203858
(43) Veröffentlichungstag der Anmeldung: 18.09.2013
(73) Patentinhaber: Deere & Company, Moline, IL 61265 (US)
(72) Erfinder: Helferich, Bernd, 67105 Schifferstadt (DE)
(74) Vertreter: John Deere GmbH & Co. KG

(56) Entgegenhaltungen:
- EP-A2- 0 266 656
- DE-A1- 1 555 606
- DE-A1- 2 620 521

## Beschreibung

Die Erfindung betrifft ein Schwingungslager für eine Abgasanlage in einem Kraftfahrzeug, mit einem radial ausgedehnten elastischen Dämpfungselement und mit einer das elastische Dämpfungselement komprimierenden Vorspanneinrichtung, wobei dem elastischen Dämpfungselement ein erster Befestigungsbereich und der Vorspanneinrichtung ein zweiter Befestigungsbereich zugeordnet ist.

Ein derartiges Schwingungslager wird beispielsweise in landwirtschaftlichen Traktoren der Serie 6030 von John Deere zur Dämpfung von in einer Abgasanlage auftretenden Schwingungen verwendet. Das Schwingungslager umfasst einen ovalisierten Gummikörper, durch den eine Gewindestange axial hindurchgeführt ist. An den Enden der Gewindestange sind zwei flache Gegenscheiben derart verschraubt, dass der Gummikörper zwischen den Gegenscheiben verspannt und auf diese Weise fixiert wird. In montiertem Zustand ist das Schwingungslager mittels eines an dem Gummikörper angebrachten ersten Befestigungswinkels sowie eines mit der Gewindestange verschraubten zweiten Befestigungswinkels zwischen einer Kabinenstruktur des landwirtschaftlichen Traktors und einem aufrecht verlaufenden Auslassrohr der Abgasanlage befestigt. Um einen unerwünschten Schwingungseintrag von Seiten des Auslassrohrs in die Kabinenstruktur zu unterdrücken, muss der Gummikörper hinreichend weich bzw. nachgiebig sein. Diese Eigenschaft führt dazu, dass gerade in radialer Auslenkungsrichtung orientierte Schwingungen bzw. Resonanzen zum Auftreten übermäßiger Amplituden führen können.

EP 0 266 656 A beschreibt einer Schwingungslager wobei eine Vorspanneinrichtung derart ausgebildet ist, dass diese ein elastisches Dämpfungselement in radialer und axialer Richtung Komprimiert.

Es ist daher Aufgabe der vorliegenden Erfindung, ein Schwingungslager anzugeben, das über verbesserte Dämpfungseigenschaften verfügt.

Diese Aufgabe wird durch ein Schwingungslager mit den Merkmalen des Patentanspruchs 1 gelöst.

Das erfindungsgemäße Schwingungslager für eine Abgasanlage in einem Kraftfahrzeug umfasst ein radial ausgedehntes elastisches Dämpfungselement sowie eine das elastische Dämpfungselement komprimierende Vorspanneinrichtung, wobei dem elastischen Dämpfungselement ein erster Befestigungsbereich und der Vorspanneinrichtung ein zweiter Befestigungsbereich zugeordnet ist. Erfindungsgemäß ist die Vorspanneinrichtung derart ausgebildet, dass diese das elastische Dämpfungselement zugleich in radialer als auch in axialer Auslenkungsrichtung komprimiert.

Die Erfindung macht sich den Umstand zunutze, dass dem elastischen Dämpfungselement durch gezielte Kompression ein progressiver Dämpfungskraftverlauf aufprägbar ist. Insofern verhält sich das elastische Dämpfungselement bei Auftreten von Schwingungen vergleichsweise geringer Amplitude nachgiebig und verhärtet sich bei deren Zunahme zusehends. Da die Kompression zugleich in radialer als auch in axialer Auslenkungsrichtung erfolgt, lassen sich übermäßige Amplituden beliebiger Orientierung wirkungsvoll unterdrücken bzw. dämpfen.

Weitere vorteilhafte Ausführungsformen des erfindungsgemäßen Schwingungslagers gehen aus den Unteransprüchen hervor.

Vorzugsweise besteht das elastische Dämpfungselement aus einem elastomeren Material mit einer Härte im Bereich von 20 bis 50 Shore A. Im Hinblick auf die bei Abgasanlagen in landwirtschaftlichen Traktoren typischerweise auftretenden Schwingungsspektren hat sich ein Wert von 25 Shore A als ideal herausgestellt. Bei dem elastomeren Material handelt es sich beispielsweise um eine hitzebeständige Kautschuk- oder Silikongummimischung. Das elastische Dämpfungselement kann dabei als radialsymmetrischer, insbesondere ovalisierter oder zylindrischer Gummikörper ausgeformt sein.

Zur Bereitstellung eines richtungsabhängigen Dämpfungskraftverlaufs kann das elastische Dämpfungselement bezüglich seiner Materialeigenschaften zudem anisotrop ausgebildet sein. So kann beispielsweise im Falle von Bauraumbeschränkungen und insofern einzuhaltenden Abständen eine in bestimmten Richtungen erhöhte Dämpfungskraft zur Vermeidung unerwünschter schwingungsbedingter Bauteilkollisionen erwünscht sein. Die Anisotropie der Materialeigenschaften lässt sich durch gezielte Beimischung geeigneter Zuschläge, beispielsweise in Form von Ruß oder dergleichen, erzielen.

Ferner besteht die Möglichkeit, dass das elastische Dämpfungselement mittels der Vorspanneinrichtung in radialer und axialer Auslenkungsrichtung unabhängig voneinander komprimierbar ist, sodass sich für jede der beiden Auslenkungsrichtungen Dämpfungskraftverläufe unterschiedlicher Progression vorgeben lassen.

Die Vorspanneinrichtung kann insbesondere zwei an dem elastischen Dämpfungselement anliegende Spannkappen aufweisen, die zum Komprimieren des elastischen Dämpfungselements mittels eines sich in axialer Auslenkungsrichtung erstreckenden Spannelements verspannbar sind. Im einfachsten Fall handelt es sich bei dem Spannelement um eine durch das elastische Dämpfungselement axial hindurchgeführte Spannschraube, an deren Enden die beiden als Metallformteile ausgebildeten Spannkappen mittels zugehöriger Gegenmuttern derart verschraubbar sind, dass sich das dazwischenliegende elastische Dämpfungselement stufenlos komprimieren lässt.

Die Spannkappen weisen beispielsweise eine glockenförmige oder zylindrische Innenkontur auf. In letzterem Fall kann eine entlang der zylindrischen Innenkontur umfangsmäßig ausgebildete Ausbuchtung vorgesehen sein, die sich bei einem Aufstecken der Spannkappen wulstförmig in eine Seitenwandung des elastischen Dämpfungselements presst. Mit anderen Worten erfolgt die Kompression des elastischen Dämpfungselements in radialer Auslenkungsrichtung bereits beim Aufstecken der Spannkappen, und zwar unabhängig von deren anschließendem Verspannen.

Im Sinne eines möglichst guten Kraft- bzw. Formschlusses kann das elastische Dämpfungselement eine mit der Innenkontur der Spannkappen korrespondierende Außenkontur aufweisen. Beispielsweise kann für den Fall einer glockenförmigen Innenkontur eine ovalisierte Außenkontur und für den Fall einer zylindrischen Innenkontur eine zylindrische Außenkontur gewählt werden.

Um ein Verbauen des Schwingungslagers unter Großserienbedingungen zu vereinfachen, können die Spannkappen durch feste Anbringung an dem elastischen Dämpfungselement unverlierbar vormontiert sein. Die Spannkappen können zu diesem Zweck an dem elastischen Dämpfungselement aufvulkanisiert oder mit diesem verklebt sein.

Zusätzlich lässt sich der Zusammenbau sowie die anschließende Justage des Schwingungslagers vereinfachen, indem eine durch das elastische Dämpfungselement hindurchgeführte Spannhülse als Kompressionsanschlag für die beiden Spannkappen dient, wobei das Spannelement innerhalb der Spannhülse geführt ist. Dies erlaubt ein definiertes Verspannen der Spannkappen ohne aufwendige Justagevorrichtungen.

Eine mögliche Beschädigung des sich unter Schwingungsbelastung verformenden elastischen Dämpfungselements seitens der Spannkappen kann insbesondere dann vermieden werden, wenn die Spannkappen entlang eines umlaufenden Randbereichs gegenüber dem elastischen Dämpfungselement nach außen abgekragt verlaufen.

Zur Befestigung des Schwingungslagers kann der erste Befestigungsbereich als an dem elastischen Dämpfungselement radial umlaufende Einbuchtung zur Aufnahme eines ersten Montageelements ausgebildet sein. Genauer gesagt kann das Montageelement als Befestigungswinkel ausgebildet sein, wobei der Befestigungswinkel eine Öffnung aufweist, durch die das elastische Dämpfungselement derart hindurchgesteckt ist, dass dieses im Bereich der Einbuchtung formschlüssig von dem Befestigungswinkel aufgenommen bzw. umgriffen wird. Zur leichteren Montage kann das elastische Dämpfungselement einen bezüglich der Einsteck- bzw. Montagerichtung verringerten Durchmesser aufweisen.

In entsprechender Weise kann der zweite Befestigungsbereich als an der Vorspanneinrichtung ausgebildeter Schraubstutzen zur Anbringung eines zweiten Montageelements ausgebildet sein. Auch bei dem zweiten Montageelement kann es sich um einen Befestigungswinkel handeln, wobei der Schraubstutzen integraler Bestandteil eines von der Vorspanneinrichtung umfassten Spannelements, beispielsweise einer von der Spannschraube gebildeten Verlängerung sein kann.

In montiertem Zustand ist das Schwingungslager mittels der beiden Montageelemente typischerweise zwischen einer Kabinenstruktur eines landwirtschaftlichen Traktors und einem aufrecht verlaufenden Auslassrohr einer Abgasanlage befestigt. Das Schwingungslager kann derart zwischen der Kabinenstruktur und dem Auslassrohr angeordnet sein, dass eine Querbewegung des Auslassrohrs mit einer radialen Auslenkungsrichtung des elastischen Dämpfungselements korrespondiert. Es sei jedoch angemerkt, dass die Verwendung des erfindungsgemäßen Schwingungslagers nicht auf eine bestimmte Anwendung begrenzt ist und auch bezüglich der Einbaulage keine besonderen Vorgaben bestehen.

Das erfindungsgemäße Schwingungslager wird im Folgenden anhand der beigefügten Zeichnungen näher erläutert. Dabei zeigen:
- Fig. 1: eine Querschnittsdarstellung eines ersten Ausführungsbeispiels des erfindungsgemäßen Schwingungslagers, und
- Fig. 2: eine Querschnittsdarstellung eines zweiten Ausführungsbeispiels des erfindungsgemäßen Schwingungslagers.

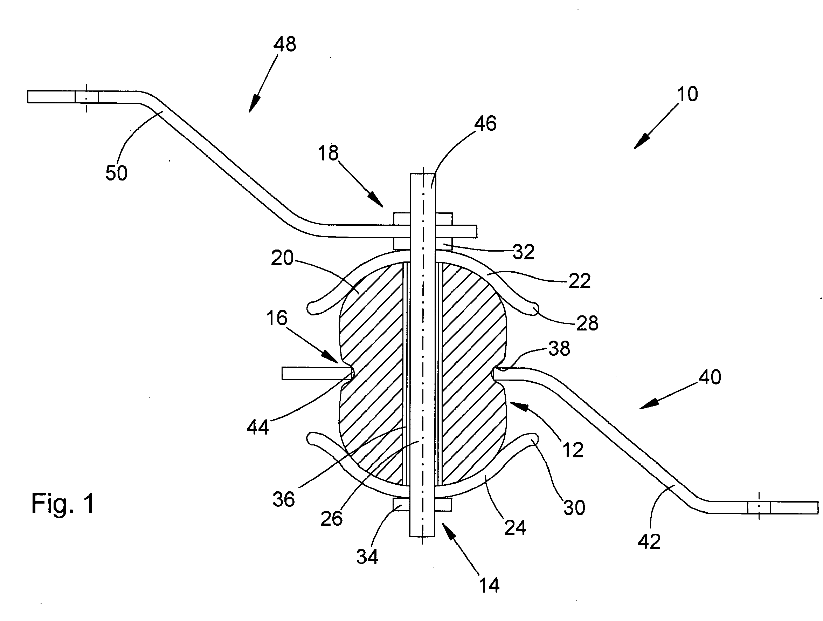

Fig. 1 zeigt eine Querschnittsdarstellung eines ersten Ausführungsbeispiels des erfindungsgemäßen Schwingungslagers für eine Abgasanlage in einem Kraftfahrzeug, wobei es sich bei dem Kraftfahrzeug um einen nicht dargestellten landwirtschaftlichen Traktor handelt.

Das Schwingungslager 10 umfasst ein radial ausgedehntes elastisches Dämpfungselement 12 sowie eine das elastische Dämpfungselement 12 komprimierende Vorspanneinrichtung 14, wobei dem elastischen Dämpfungselement 12 ein erster Befestigungsbereich 16 und der Vorspanneinrichtung 14 ein zweiter Befestigungsbereich 18 zugeordnet ist.

Das im vorliegenden Fall als radialsymmetrischer, ovalisierter Gummikörper 20 ausgeformte elastische Dämpfungselement 12 besteht aus einem elastomeren Material mit einer Härte im Bereich von 20 bis 50 Shore A. Hierbei hat sich im Hinblick auf die bei Abgasanlagen in landwirtschaftlichen Traktoren typischerweise auftretenden Schwingungsspektren ein Wert von 25 Shore A als ideal herausgestellt. Bei dem elastomeren Material handelt es sich um eine hitzebeständige Kautschuk- oder Silikongummimischung.

Ferner weist die Vorspanneinrichtung 14 zwei an dem elastischen Dämpfungselement 12 anliegende Spannkappen 22, 24 auf, die zum Komprimieren des elastischen Dämpfungselements 12 mittels eines sich in axialer Auslenkungsrichtung erstreckenden Spannelements 26 verspannbar sind. Wie sich Fig. 1 entnehmen lässt, weisen die Spannkappen 22, 24 eine mit der ovalisierten Außenkontur des elastischen Dämpfungselements 12 korrespondierende glockenförmige Innenkontur auf.

Um eine mögliche Beschädigung des sich unter Schwingungsbelastung verformenden elastischen Dämpfungselements 12 seitens der Spannkappen 22, 24 zu vermeiden, ist vorgesehen, dass die Spannkappen 22, 24 entlang eines umlaufenden Randbereichs 28, 30 gegenüber dem elastischen Dämpfungselement 12 nach außen abgekragt verlaufen.

Bei dem Spannelement 26 handelt es sich um eine durch das elastische Dämpfungselement 12 axial hindurchgeführte Spannschraube, an deren Enden die beiden als Metallformteile ausgebildeten Spannkappen 22, 24 mittels zugehöriger Gegenmuttern 32, 34 derart verschraubbar sind, dass sich das dazwischenliegende elastische Dämpfungselement 12 zugleich in radialer als auch in axialer Auslenkungsrichtung stufenlos komprimieren lässt.

Um ein Verbauen des Schwingungslagers 10 unter Großserienbedingungen zu vereinfachen, sind die Spannkappen 22, 24 durch feste Anbringung an dem elastischen Dämpfungselement 12 unverlierbar vormontiert. Die Spannkappen 22, 24 sind zu diesem Zweck an dem elastischen Dämpfungselement 12 aufvulkanisiert oder mit diesem verklebt.

Zusätzlich dient eine durch das elastische Dämpfungselement 12 hindurchgeführte Spannhülse 36 als Kompressionsanschlag für die beiden Spannkappen 22, 24, wobei das Spannelement 26 innerhalb der Spannhülse 36 geführt ist. Dies erlaubt ein definiertes Verspannen der Spannkappen 22, 24 ohne aufwendige Justagevorrichtungen.

Zur Befestigung des Schwingungslagers 10 ist der erste Befestigungsbereich 16 als an dem elastischen Dämpfungselement 12 radial umlaufende Einbuchtung 38 zur Aufnahme eines ersten Montageelements 40 ausgebildet. Genauer gesagt ist das erste Montageelement 40 als Befestigungswinkel 42 ausgebildet, wobei der Befestigungswinkel 42 eine Öffnung 44 aufweist, durch die das elastische Dämpfungselement 12 derart hindurchgesteckt ist, dass dieses im Bereich der Einbuchtung 38 formschlüssig von dem Befestigungswinkel 42 aufgenommen bzw. umgriffen wird. Zur leichteren Montage weist das elastische Dämpfungselement 12 einen bezüglich der Einsteck- bzw. Montagerichtung verringerten Durchmesser auf.

In entsprechender Weise ist der zweite Befestigungsbereich 18 als an der Vorspanneinrichtung 14 ausgebildeter Schraubstutzen 46 zur Anbringung eines zweiten Montageelements 48 ausgebildet. Auch bei dem zweiten Montageelement 48 handelt es sich um einen Befestigungswinkel 50, wobei der Schraubstutzen 46 integraler Bestandteil des von der Vorspanneinrichtung 14 umfassten Spannelements 26, genauer gesagt einer von der Spannschraube gebildeten Verlängerung ist.

In montiertem Zustand ist das Schwingungslager 10 mittels der beiden Montageelemente 40, 48 zwischen einer Kabinenstruktur des landwirtschaftlichen Traktors und einem aufrecht verlaufenden Auslassrohr einer Abgasanlage befestigt. Hierbei ist das Schwingungslager 10 derart zwischen der Kabinenstruktur und dem Auslassrohr der Abgasanlage angeordnet, dass eine Querbewegung des Auslassrohrs mit einer radialen Auslenkungsrichtung des elastischen Dämpfungselements 12 korrespondiert.

Eine optionale Weiterbildung des Schwingungslagers 10 sieht vor, dass das elastische Dämpfungselement 12 zur Bereitstellung eines richtungsabhängigen Dämpfungskraftverlaufs bezüglich seiner Materialeigenschaften anisotrop ausgebildet ist. So kann beispielsweise im Falle von Bauraumbeschränkungen und insofern einzuhaltenden Abständen eine in bestimmten Richtungen erhöhte Dämpfungskraft zur Vermeidung unerwünschter schwingungsbedingter Bauteilkollisionen erwünscht sein. Die Anisotropie der Materialeigenschaften wird durch gezielte Beimischung geeigneter Zuschläge, beispielsweise in Form von Ruß oder dergleichen, erzielt.

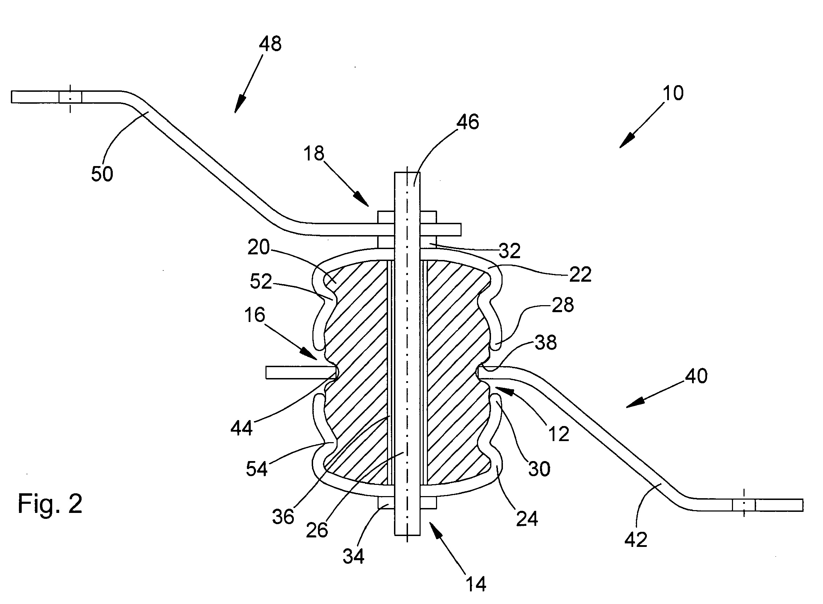

Fig. 2 zeigt eine Querschnittsdarstellung eines zweiten Ausführungsbeispiels des erfindungsgemäßen Schwingungslagers für eine Abgasanlage in einem Kraftfahrzeug.

Dieses unterscheidet sich von dem in Fig. 1 dargestellten ersten Ausführungsbeispiel lediglich in Bezug auf die Formgebung des elastischen Dämpfungselements 12, bei dem es sich im vorliegenden Fall um einen radialsymmetrischen, zylindrischen Gummikörper 20 handelt. Dementsprechend weisen die Spannkappen 22, 24 eine mit der zylindrischen Außenkontur korrespondierende zylindrische Innenkontur auf.

Eine entlang der zylindrischen Innenkontur umfangsmäßig ausgebildete Ausbuchtung 52, 54 presst sich bei einem Aufstecken der Spannkappen 22, 24 wulstförmig in eine Seitenwandung des elastischen Dämpfungselements 12. Mit anderen Worten erfolgt die Kompression des elastischen Dämpfungselements 12 in radialer Auslenkungsrichtung bereits beim Aufstecken der Spannkappen 22, 24, und zwar unabhängig von deren anschließendem Verspannen.

Damit besteht die Möglichkeit, dass das elastische Dämpfungselement 12 mittels der Vorspanneinrichtung 14 in radialer und axialer Auslenkungsrichtung unabhängig voneinander komprimierbar ist, sodass sich für jede der beiden Auslenkungsrichtungen Dämpfungskraftverläufe unterschiedlicher Progression vorgeben lassen.

## Patentansprüche

1. Schwingungslager für eine Abgasanlage in einem Kraftfahrzeug, mit einem als radialsymmetrischer, ovalisierter Gummikörper (20) ausgeformten elastischen Dämpfungselement (12) sowie einer das elastische Dämpfungselement (12) komprimierenden Vorspanneinrichtung (14), die zwei an dem elastischen Dämpfungselement (12) anliegende Spannkappen (22, 24) mit einer mit der ovalisierten Außenkontur des elastischen Dämpfungselements (12) korrespondierenden glockenförmigen Innenkontur sowie ein Spannelement (26) aufweist, bei dem es sich um eine durch das elastische Dämpfungselement (12) axial hindurchgeführte Spannschraube handelt, an deren Enden die beiden Spannkappen (22, 24) mittels zugehöriger Gegenmuttern (32, 34) derart verschraubbar sind, dass diese das dazwischenliegende elastische Dämpfungselement (12) zugleich in radialer als auch in axialer Auslenkungsrichtung komprimieren, wobei dem elastischen Dämpfungselement (12) ein erster Befestigungsbereich (16) als an dem elastischen Dämpfungselement (12) radial umlaufende Einbuchtung (38) zur Aufnahme eines ersten Montageelements (40) und der Vorspanneinrichtung (14) ein zweiter Befestigungsbereich (18) als an der Vorspanneinrichtung (14) ausgebildeter Schraubstutzen (46) zur Anbringung eines zweiten Montageelements (48) zugeordnet ist,

2. Schwingungslager nach Anspruch 1, **dadurch gekennzeichnet, dass** das elastische Dämpfungselement (12) aus einem elastomeren Material mit einer Härte im Bereich von 20 bis 50 Shore A besteht.

3. Schwingungslager nach Anspruch 1 oder 2, **dadurch gekennzeichnet, dass** das elastische Dämpfungselement (12) bezüglich seiner Materialeigenschaften anisotrop ausgebildet ist.

4. Schwingungslager nach einem der Ansprüche 1 bis 3, **dadurch gekennzeichnet, dass** das elastische Dämpfungselement (12) mittels der Vorspanneinrichtung (14) in radialer und axialer Auslenkungsrichtung unabhängig voneinander komprimierbar ist.

5. Schwingungslager nach einem der Ansprüche 1 bis 4, **dadurch gekennzeichnet, dass** die Vorspanneinrichtung (14) zwei an dem elastischen Dämpfungselement (12) anliegende Spannkappen (22, 24) aufweist, die zum Komprimieren des elastischen Dämpfungselements (12) mittels eines sich in axialer Auslenkungsrichtung erstreckenden Spannelements (26) verspannbar sind.

6. Schwingungslager nach einem der Ansprüche 1 bis 5, **dadurch gekennzeichnet, dass** die Spannkappen (22, 24) eine glockenförmige oder zylindrische Innenkontur aufweisen.

7. Schwingungslager nach einem der Ansprüche 1 bis 6, **dadurch gekennzeichnet, dass** das elastische Dämpfungselement (12) eine mit der Innenkontur der Spannkappen (22, 24) korrespondierende Außenkontur aufweist.

8. Schwingungslager nach einem der Ansprüche 1 bis 7, **dadurch gekennzeichnet, dass** die Spannkappen (22, 24) durch feste Anbringung an dem elastischen Dämpfungselement (12) vormontiert sind.

9. Schwingungslager nach einem der Ansprüche 1 bis 8, **dadurch gekennzeichnet, dass** eine durch das elastische Dämpfungselement (12) hindurchgeführte Spannhülse (36) als Kompressionsanschlag für die beiden Spannkappen (22, 24) dient.

10. Schwingungslager nach einem der Ansprüche 1 bis 9, **dadurch gekennzeichnet, dass** die Spannkappen (22, 24) entlang eines umlaufenden Randbereichs (28, 30) gegenüber dem elastischen Dämpfungselement (12) nach außen abgekragt verlaufen.

11. Schwingungslager nach einem der Ansprüche 1 bis 10, **dadurch gekennzeichnet, dass** der erste Befestigungsbereich (16) als an dem elastischen Dämpfungselement (12) radial umlaufende Einbuchtung (38) zur Aufnahme eines ersten Montageelements (40) ausgebildet ist.

12. Schwingungslager nach einem der Ansprüche 1 bis 11, **dadurch gekennzeichnet, dass** der zweite Befestigungsbereich (18) als an der Vorspanneinrichtung (14) ausgebildeter Schraubstutzen (46) zur Anbringung eines zweiten Montageelements (48) ausgebildet ist.

13. Kraftfahrzeug, insbesondere landwirtschaftlicher Traktor, mit einem Schwingungslager (10) nach einem der Ansprüche 1 bis 12, wobei das Schwingungslager (10) derart zwischen einer Kabinenstruktur und einem aufrecht verlaufenden Auslassrohr einer Abgasanlage angeordnet ist, dass eine Querbewegung des Auslassrohrs mit einer radialen Auslenkungsrichtung des elastischen Dämpfungselements (12) korrespondiert.

## Claims

1. Vibration bearing for an exhaust system in a motor vehicle, with an elastic damping element (12), formed as a radially symmetrical, ovalised rubber body (20), and a pretension device (14) compressing the elastic damping element (12), which pretension device comprises two clamping caps (22, 24) which lie on the elastic damping element (12) and have a bell-shaped inner contour corresponding to the ovalised outer contour of the elastic damping element (12) and also comprises a clamping element (26) which is a clamping screw which passes axially through the elastic damping element (12), and on the ends of which the two clamping caps (22, 24) can be screwed by means of associated lock nuts (32, 34) such that said lock nuts compress the elastic damping element (12) lying in-between in both the radial and in the axial deflection direction, wherein a first fixing region (16) is allocated to the elastic damping element (12) as a radial circumferential recess (38) on the elastic damping element (12) to receive a first mounting element (40) and a second fixing region (18) is allocated to the pretension device (14) as a screw neck (46) formed on the pretension device (14) for attaching a second mounting element (48).

2. Vibration bearing according to Claim 1, **characterised in that** the elastic damping element (12) consists of an elastomer material with a hardness in the range from 20 to 50 Shore A.

3. Vibration bearing according to Claim 1 or 2, **characterised in that** the elastic damping element (12) is formed anisotropically with regard to its material properties.

4. Vibration bearing according to any of Claims 1 to 3, **characterised in that** the elastic damping element (12) can be compressed by means of the pretension device (14) in the axial and radial deflection directions independently of each other.

5. Vibration bearing according to any of Claims 1 to 4, **characterised in that** the pretension device (14) comprises two clamping caps (22, 24) which lie on the elastic damping element (12) and can be tensioned to compress the elastic damping element (12) by means of a clamping element (26) extending in the axial deflection direction.

6. Vibration bearing according to any of Claims 1 to 5, **characterised in that** the clamping caps (22, 24) have a bell-shaped or cylindrical inner contour.

7. Vibration bearing according to any of Claims 1 to 6, **characterised in that** the elastic damping element (12) has an outer contour corresponding to the inner contour of the clamping caps (22, 24).

8. Vibration bearing according to any of Claims 1 to 7, **characterised in that** the clamping caps (22, 24) are pre-mounted by fixed attachment on the elastic damping element (12).

9. Vibration bearing according to any of Claims 1 to 8, **characterised in that** a clamping sleeve (36) passing through the elastic damping element (12) serves as a compression stop for the two clamping caps (22, 24).

10. Vibration bearing according to any of Claims 1 to 9, **characterised in that** the clamping caps (22, 24) have an outer rim along a circumferential edge region (28, 30) protruding over the elastic damping element (12).

11. Vibration bearing according to any of Claims 1 to 10, **characterised in that** the first fixing region (16) is formed as a radial circumferential recess (38) on the elastic damping element (12) to receive a first mounting element (40).

12. Vibration bearing according to any of Claims 1 to 11, **characterised in that** the second fixing region (18) is formed as a screw neck (46) formed on the pretension device (14) for attaching a second mounting element (48).

13. Motor vehicle, in particular agricultural tractor, with a vibration bearing (10) according to any of Claims 1 to 12, wherein the vibration bearing (10) is arranged between a cabin structure and a vertically running outlet pipe of an exhaust system such that a transverse movement of the outlet pipe corresponds with a radial deflection direction of the elastic damping element (12).

## Revendications

1. Palier d'oscillation pour une installation de gaz d'échappement dans un véhicule à moteur, avec un corps d'amortissement élastique (12) réalisé sous forme de corps de caoutchouc ovalisé (20), à symétrie radiale, ainsi qu'avec un dispositif de précontrainte (14) comprimant l'élément d'amortissement élastique (12), qui présente deux chapeaux de serrage (22, 24) appliqués sur l'élément d'amortissement élastique (12) avec un contour intérieur en forme de cloche correspondant au contour extérieur ovalisé de l'élément d'amortissement élastique (12) ainsi qu'un élément de serrage (26), qui est une vis de serrage menée axialement à travers l'élément d'amortissement élastique (12), aux extrémités de laquelle les deux chapeaux de serrage (22, 24) peuvent être vissés à l'aide de contre-écrous correspondants (32, 34), de telle manière que ceux-ci compriment l'élément d'amortissement élastique (12) placé entre eux en même temps en direction de déviation radiale et axiale, dans lequel une première région de fixation (16) est associée à l'élément d'amortissement élastique (12) sous la forme d'un creux (38) ceinturant radialement l'élément d'amortissement élastique (12) afin de recevoir un premier élément de montage (40) et une deuxième région de fixation (18) est associée au dispositif de précontrainte (14) sous forme de raccord fileté (46) réalisé sur le dispositif de précontrainte (14) en vue de la pose d'un deuxième élément de montage (48).

2. Palier d'oscillation selon la revendication 1, **caractérisé en ce que** l'élément d'amortissement élastique (12) se compose d'un matériau élastomère avec une dureté comprise dans la plage de 20 à 50 Shore A.

3. Palier d'oscillation selon la revendication 1 ou 2, **caractérisé en ce que** l'élément d'amortissement élastique (12) est anisotrope au niveau de ses propriétés de matériau.

4. Palier d'oscillation selon l'une quelconque des revendications 1 à 3, **caractérisé en ce que** l'élément d'amortissement élastique (12) peut être comprimé au moyen du dispositif de précontrainte (14) en direction de déviation radiale et axiale indépendamment l'une de l'autre.

5. Palier d'oscillation selon l'une quelconque des revendications 1 à 4, **caractérisé en ce que** le dispositif de précontrainte (14) présente deux chapeaux de serrage (22, 24) appliqués sur l'élément d'amortissement élastique (12), qui peuvent être serrés au moyen d'un élément de serrage (26) s'étendant dans la direction de déviation axiale afin de comprimer l'élément d'amortissement élastique (12).

6. Palier d'oscillation selon l'une quelconque des revendications 1 à 5, **caractérisé en ce que** les chapeaux de serrage (22, 24) présentent un contour intérieur en forme de cloche ou cylindrique.

7. Palier d'oscillation selon l'une quelconque des revendications 1 à 6, **caractérisé en ce que** l'élément d'amortissement élastique (12) présente un contour extérieur correspondant au contour intérieur des chapeaux de serrage (22, 24).

8. Palier d'oscillation selon l'une quelconque des revendications 1 à 7, **caractérisé en ce que** les chapeaux de serrage (22, 24) sont préassemblés par une pose fixe sur l'élément d'amortissement élastique (12).

9. Palier d'oscillation selon l'une quelconque des revendications 1 à 8, **caractérisé en ce qu'**une douille de serrage (36) menée à travers l'élément d'amortissement élastique (12) sert de butée de compression pour les deux chapeaux de serrage (22, 24).

10. Palier d'oscillation selon l'une quelconque des revendications 1 à 9, **caractérisé en ce que** les chapeaux de serrage (22, 24) sont coudés vers l'extérieur par rapport à l'élément d'amortissement élastique (12) le long d'une région de bord périphérique (28, 30).

11. Palier d'oscillation selon l'une quelconque des revendications 1 à 10, **caractérisé en ce que** la première région de fixation (16) est réalisée sous la forme d'un creux (38) ceinturant radialement l'élément d'amortissement élastique (12) afin de recevoir un premier élément de montage (40).

12. Palier d'oscillation selon l'une quelconque des revendications 1 à 11, **caractérisé en ce que** la deuxième région de fixation (18) est réalisée sous forme de raccord fileté (46) sur le dispositif de précontrainte (14) en vue de la pose d'un deuxième élément de montage (48).

13. Véhicule à moteur, en particulier tracteur agricole, équipé d'un palier d'oscillation (10) selon l'une quelconque des revendications 1 à 12, dans lequel le palier d'oscillation (10) est placé entre une structure de cabine et un tuyau d'échappement orienté verticalement d'une installation de gaz d'échappement, de telle manière qu'un mouvement transversal du tuyau d'échappement corresponde à une direction de déviation radiale de l'élément d'amortissement élastique (12).
